# EUROPEAN PATENT APPLICATION

(11) **EP 1 744 186 A1**
(43) Date of publication of application: **17.01.2007**
(21) Application number: 05734083.8
(22) Date of filing: 25.04.2005
(51) Int. Cl.: G02B 3/00, C08F 20/28

(54) **MICROLENS**

(30) Priority: 28.04.2004 JP 2004133848; 24.03.2005 JP 2005086352
(71) Applicant: OMRON CORPORATION, Kyoto-shi, Kyoto 600-8530 (JP)
(72) Inventor: OZAWA, Naoshi, c/o OMRON Corporation, Shimogyo-ku, Kyoto-shi, Kyoto 6008530 (JP); FUNAKI, Kenji, c/o OMRON Corporation, Shimogyo-ku, Kyoto-shi, Kyoto 6008530 (JP); KITAMURA, Kyoji, c/o OMRON Corporation, Shimogyo-ku, Kyoto-shi, Kyoto 6008530 (JP); NAKAMURA, Masaki, c/o OMRON Corporation, Shimogyo-ku, Kyoto-shi, Kyoto 6008530 (JP); WATANABE, Yuji, c/o OMRON Corporation, Shimogyo-ku, Kyoto-shi, Kyoto 6008530 (JP); FUKUHARA, Tomohiro, c/o OMRON Corporation, Shimogyo-ku, Kyoto-shi, Kyoto 600853 (JP); MATSUMOTO, Ryoichi, c/o OMRON Corporation, Shimogy-ku, Kyoto-shi, Kyoto 600853 (JP)
(74) Representative: Kilian, Helmut
(86) International application number: PCT/JP2005/007815
(87) International publication number: WO 2005/106538

(57) **Abstract**

Provided is a microlens having an inorganic compound layer directly formed on the surface of a base lens material that is resistant to cracking and wrinkling of the inorganic compound layer under high-temperature and high-humidity environment and also to cracking of the base lens material by repeated temperature fluctuation, and an optical device using the microlens. A microlens, comprising a hardened product obtained by polymerization of a polymerizable composition containing a polymerizable monomer and metal oxide fine particles having an average diameter of 1 to 80 nm as essential components and an inorganic compound layer coated on the surface thereof. An optical device equipped with the microlens.

## Description

### Technical Field

The present invention relates to a microlens, specifically a microlens of a hardened product prepared by polymerization of a polymerizable composition, having an inorganic compound layer coated on the surface thereof.

### Background Art

In the recent rapid movement for reduction in size, thickness and weight and for improvement in performance such as high definition of optical devices, there exists a need for miniaturization and improvement in performance also in optical parts used in optical devices. There are more requirements, for example, for improvement in resistance to use environment and improvement in performance, especially in lens-based optical parts used in optical devices. Glass lenses have been used mainly, because they were very superior in optical properties, but were disadvantageous in processability when used in applications that demand processing into various shapes. Accordingly, lenses of a UV-hardening or thermosetting resin composition or a thermoplastic resin that allow fine irregular surface have been used more frequently in many applications, replacing glass lenses.

The lenses of a curable resin composition above are generally prepared by polymerizing, after or during molding a resin composition containing a polymerizable monomer, the monomer or hardening the resin composition by using heat, ultraviolet ray, and/or electron beam. A stamper method of pressing a fine irregular surfaced stamper is often used in molding a resin that hardens by irradiation of ultraviolet ray and/or electron beam. The method, which is advantageous in that it allows molding of various fine irregular surfaced lenses and leads to reduction in production cost, can be used in processing of microlenses. The microlenses above have a size of several mm or less.

In production of synthetic resin optical parts such as plastic lens, it is generally necessary to improve surface softness, chemical resistance, and other properties characteristic to synthetic resin lenses and to prevent surface reflection as optical lenses. For that purpose, known are a method of forming a silicon oxide SiOₓ thin layer that is superior in hardness, chemical resistance, and others, and a method of using an antireflective layer of a multilayer layer prepared by depositing a thin layer of a high-refractive index material such as ZrO₂, TiO₂, CaO₂, or Ta₂O₅ and a thin layer of a low-refractive index material such as MgF₂ or SiO₂ alternately. However, presence of an inorganic compound layer such as antireflective layer formed directly on the surface of resin lens caused a problem that there were cracking and wrinkling of the inorganic compound layer generated under high-temperature high-humidity environment because of insufficient adhesiveness between the resin lens and the inorganic compound layer. The cracking is caused by cracking of the inorganic compound layer, and the wrinkling is caused by separation of the inorganic compound layer from the base material in the shape of wrinkle.

A hardcoat layer is generally formed between a resin lens and an inorganic compound for improvement in adhesiveness between them, but it is technically difficult to form a hardcoat layer at a uniform thickness on a finely and complicated shaped product such as microlens.

Alternatively, for prevention of the cracking and wrinkling when an inorganic compound layer is formed on a complicated shaped resin such as resin microlens array, proposed was a method of forming a semimetal-semiconductor layer between a resin microlens array and an antireflective layer by sputtering, oxidizing and modifying it with plasma, and forming an intermediate layer of the semimetal-semiconductor layer and the oxide layer (Patent Document 1). However, the method had a disadvantage of demanding additional special step.

Yet alternatively, for prevention of cracking and wrinkling of the inorganic compound layer, proposed was a method of controlling thickness of the inorganic compound layer in a particular range and adjusting the entire stress (in particular, compressive stress) generated in the inorganic compound layer (Patent Document 2). The method is aimed at preventing cracking and wrinkling caused during deposition of the inorganic compound layer and caused by repeated temperature fluctuation, and does not solve the problem of cracking and wrinkling of the inorganic compound under high-temperature high-humidity environment.

Alternatively, a method of producing a microlens with a resin containing fine particles of an oxide, halide, sulfide, or carbonate salt (BaF₂, Al₂O₃, BeO, CaCO₃, SiO₂, TiO₂, or ZnS) was reported (Patent Document 3). However, the method is aimed at improving thermal stability of resin-lens refractive index, and not at improving high-temperature high-humidity resistance of the inorganic compound layer such as antireflective layer formed on microlens.

In addition, a method of forming a fine irregular surface by pressing a stamper onto a photocuring resin composition containing oxide fine particles such as SiO₂, ZrO₂, SnO₂, or Al₂O₃, and molding an optical part by photo-hardening the resin while the stamper is removed was reported (Patent Document 4). The oxide fine particles are added for preservation of the shape formed by the stamper before photo-hardening, and thus, the method is not aimed at improving high-temperature high-humidity resistance of the inorganic compound layer formed on hardened product surface.

In such a microlens, there are requirements not only in high-temperature high-humidity resistance of the inorganic compound layer formed on the surface, but also in resistance of the base lens material to cracking by repeated temperature fluctuation during use.
Patent Document 1: Japanese Patent Application Laid-Open No. 2004-85643
Patent Document 2: Japanese Patent Application Laid-Open No. 2004-271653
Patent Document 3: Japanese Patent Application Laid-Open No. 2003-240901
Patent Document 4: Japanese Patent Application Laid-Open No. 2003-82043

### Disclosure of Invention

### Technical Problems to be Solved

An object of the present invention, which was made under the circumstances above, is to provide a microlens having an inorganic compound layer formed directly on the surface of a base lens material that does not result in cracking and wrinkling of the inorganic compound layer even under high-temperature high-humidity environment, and an optical device using the microlens.

Another object of the present invention is to provide a microlens resistant to cracking and wrinkling of an inorganic compound layer formed on base lens material surface under high-temperature and high-humidity environment and also to cracking of the base lens material itself by repeated temperature fluctuation during use, and an optical device using the microlens.

### Means to Solve the Problems

The present invention relates to an microlens, comprising a hardened product obtained by polymerization of a polymerizable composition containing a polymerizable monomer and metal oxide fine particles having an average diameter of 1 to 80 nm as essential components and an inorganic compound layer coated on the surface thereof.

The present invention also relates to an optical device using the microlens.

The microlens in the present description is used in a concept including single lenses having a diameter of several dozen µm to several mm and a central thickness of several µm to several mm and microlens arrays containing multiple such lenses aligned one- or two-dimensionally.

The base lens material means a hardened resin product having a microlens shape.

### Effects of the invention

According to the present invention, the adhesiveness between an inorganic compound layer and a base lens material under high-temperature high-humidity environment increases, without a hardcoat layer or an intermediate layer formed, and thus, it is possible to prevent separation of the inorganic compound layer from the base lens material in the shape of wrinkle and, as a result, to prevent wrinkling effectively.
It is also possible to prevent cracking of the inorganic compound layer itself under high-temperature high-humidity environment effectively.
It is further possible to prevent cracking of the base lens material itself by repeated temperature fluctuation effectively.

### Brief Description of Drawings

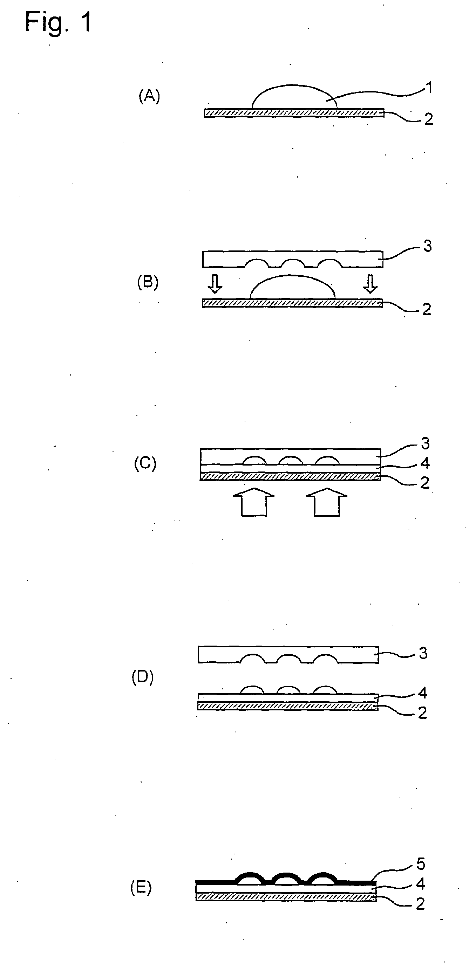

Figure 1 is a schematic flowchart illustrating the method of producing a microlens according to the present invention.

### Explanation of Reference Numerals

- 1:: Polymerizable composition,
- 2:: Substrate,
- 3:: Stamper,
- 4:: Hardened molded product, and
- 5:: Inorganic compound layer.

### Best Mode for Carrying Out the Invention

The microlens according to the present invention is made of a hardened product obtained by polymerizing a polymerizable composition containing a polymerizable monomer and metal oxide fine particles as essential components and an inorganic compound layer coated on the surface thereof. In the present invention, it is possible to prevent cracking and wrinkling of the inorganic compound layer under high-temperature and high-humidity environment effectively, by adding metal oxide fine particles into the hardened product for base microlens material, even if the inorganic compound layer is formed directly on the surface of the base lens material. Absence of the metal oxide fine particles leads to cracking and wrinkling of the inorganic compound layer under high-temperature high-humidity environment.

The particle diameter of the metal oxide fine particles for use in the present invention is not particularly limited, if the fine particles allow transmission of light through the microlens without scattering. The average particle diameter of the metal oxide fine particles is specifically 1 to 80 nm, preferably 1 to 30 nm. The average particle diameter is preferably smaller from the point of optical properties, but the lower limit of the average particle diameter of currently commercially available metal oxide fine particles is 1 nm. An average particle diameter of more than 80 nm causes, for example, Rayleigh scattering and thus deterioration in light transmittance because of difference in refractive index from other constituent materials.

The average particle diameter of the metal oxide fine particles in the present description is a value determined by using a dynamic light-scattering particle diameter distribution analyzer LB-550 (manufactured by Horiba, Ltd.).

The metal oxide fine particles are not limited to fine particles prepared by gas-phase method, and fine particles prepared by liquid-phase method such as sol-gel method may be used if the object of the present invention is achieved.
Typical examples of the metal oxide fine particles produced by the production methods above include silica fine particles, alumina fine particles, titania fine particles, zirconia fine particles, zinc oxide fine particles, and the like. Among them, silica fine particles, which have a refractive index close to that of the resin material such as acrylate or epoxy resin and give more transparent hardened product easily, are used favorably.

An organosol, containing the metal oxide fine particles dispersed in an organic solvent and a polymerizable monomer, is used favorably, because it is easier to mix with the polymerizable monomer. Examples of the commercially available products include isopropanol silica sol IPA-ST (manufactured by Nissan Chemical Industries Ltd.), methylethylketone silica sol MEK-ST (manufactured by Nissan Chemical Industries Ltd.), OSCAL (manufactured by Catalysts & Chemicals Industries Co., Ltd.), Quartron PL (manufactured by Fuso Chemical Co., Ltd), NANOPOX (manufactured by Hanse Chemie), NANOCRYL (manufactured by Hanse Chemie), and HC-900 (manufactured by Arakawa Chemical Industries, Ltd).

The metal oxide fine particles are preferably hydrophobicized, from the viewpoint of dispersibility in the base lens material. The hydrophobicizing treatment is preferably performed by using a surface-finishing agent such as silane-coupling agent or silylating agent that is conventionally used as a hydrophobicizing agent for hydrophobicizing the surface of metal oxide fine particles in the fields of adhesive and coating agents. Specifically in the hydrophobicizing treatment, a surface-finishing agent is normally added to and mixed with an organic solvent containing dispersed metal oxide fine particles at normal temperature or under heat, before the metal oxide fine particles are mixed with a polymerizable monomer, in preparation of a polymerizable composition. In particular, when silica is used as metal oxide fine particles and a silane-coupling agent is added as surface-finishing agent, silica sol and the silane-coupling agent are preferably mixed and stirred at normal temperature or under heat, before silica is mixed with polymerizable monomer. (A coat layer of the surface-finishing agent is formed on the surface of the fine particles, simply by mixing the metal oxide fine particles with the surface finishing agent).

Typical examples of the silane-coupling agents include γ-(2-aminoethyl)aminopropyltrimethoxysilane, γ-(2-aminoethyl)aminopropylmethyldimethoxysilane, β-(3,4-epoxycyclohexyl)ethyltrimethoxysilane, γ-aminopropyltrimethoxysilane, γ-aminopropyltriethoxysilane, γ-methacryloxypropyltrimethoxysilane, γ-methacryloxypropyltriethoxysilane, γ-methacryloxypropylmethyldimethoxysilane, γ-acryloxypropyltrimethoxysilane, N-β-(N-vinylbenzylaminoethyl)-γ-aminopropyltrimethoxysilane hydrochloride salt, γ-glycidoxypropyltrimethoxysilane, aminosilane, γ-mercaptopropyltrimethoxysilane, methyltrimethoxysilane, methyltriethoxysilane, vinyltriacetoxysilane, γ-chloropropyltrimethoxysilane, hexamethyldisilazane, γ-anilinopropyltrimethoxysilane, vinyltrimethoxysilane, vinyltriethoxysilane, vinyltris-(β-methoxyethoxy) silane, octadecyldimethyl[3-(trimethoxysilyl)propyl]ammonium chloride, γ-chloropropylmethyldimethoxysilane, γ-mercaptopropylmethyldimethoxysilane, methyltrichlorosilane, dimethylchlorosilane, trimethylchlorosilane, vinyltrichlorosilane, γ-glycidoxypropyltrimethoxysilane, γ-methacryloxypropylmethyldimethoxysilane, γ-aminopropyltrimethoxysilane, and the like. In particular when a (meth)acrylate is used as a polymerizable monomer, γ-methacryloxypropyltrimethoxysilane, γ-methacryloxypropyltriethoxysilane, γ-methacryloxypropylmethyldimethoxysilane, or γ-acryloxypropyltrimethoxysilane is preferable, because it gives a very favorable result from the viewpoint of reactivity.
The amount of the surface-finishing agent used is preferably 1 to 100 wt %, particularly preferably 20 to 50 wt %, with respect to the metal oxide fine particles.

The content of the metal oxide fine particles is not particularly limited, if the object of the present invention is achieved, but preferably 1 to 60 wt %, more preferably 10 to 50 wt %, and still more preferably 20 to 40 wt %, with respect to the entire polymerizable composition. A content of less than 1 wt % leads to decrease in the advantageous effect of adding the metal oxide fine particles, deterioration in adhesiveness between the inorganic compound layer and the base lens material, and easier wrinkling of the inorganic compound layer. On the other hand, a content of more than 60 wt % leads to easier cracking during baking for acceleration of resin hardening.

The polymerizable monomer according to the present invention is at least one monomer selected from the group consisting of radical and cationic polymerizable monomers. Normally, all polymerizable monomers used are radical or cationic polymerizable monomers.
The content of the polymerizable monomers is not particularly limited, if the object of the present invention is achieved, and normally, preferably 30 to 99 wt %, particularly preferably 40 to 80 wt %, with respect to the entire polymerizable composition.

The radical polymerizable monomer is not particularly limited, if the object of the present invention is achieved, and various radical polymerizable monomers are usable. If polymerization is preformed photochemically, the radical polymerizable monomer is preferably a (meth)acrylate monomer, from the viewpoints of reactivity and transparency. Examples of the (meth)acrylate monomers include monomers having an aliphatic, alicyclic, aromatic, or heterocyclic skeleton. Normally, the (meth)acrylate monomer used contains carbon, hydrogen, and oxygen atoms, but one or more fluorine, bromine, sulfur, or nitrogen atoms may be added for adjustment of the refractive index.
In the present invention, the radical polymerizable monomer preferably contains a (meth)acrylate (A) having a cyclic structure (hereinafter, referred to as "component A") and an aliphatic (meth)acrylate (B) (hereinafter, referred to as "component B") as essential components. By using these monomers as essential components, it is possible to prevent cracking of the base lens material by repeated temperature fluctuation.

The (meth)acrylate in the present description means an acrylate and a methacrylate. For example, pentaerythritol tri(meth)acrylate may be pentaerythritol triacrylate, pentaerythritol trimethacrylate, or a mixture thereof. Similarly, (meth)acryloyl group means an acryloyl or methacryloyl group.

The component A is not particularly limited, if it is an (meth)acrylate having a cyclic structure such as aliphatic, heterocyclic, or aromatic ring.

Typical examples of the alicyclic (meth)acrylate include isobornyl (meth)acrylate, cyclohexyl (meth)acrylate, (meth)acryloyloxymethylcyclohexane, perfluoro(meth)acryloyloxymethylcyclohexane, dimethylol tricyclo [5.2.1.0^{2,6}] decane di (meth) acrylate, 1,4-cyclohexanedimethanol di(meth)acrylate, tricyclo [3.3.1.1^{3,7}]decane-1,3-dimethanol di(meth)acrylate, tricyclo[3.3.1.1^{3,7}]decan-1,3-diol di(meth)acrylate, 1,3-bis (2 - (meth) acryloyloxyethyloxycarbo)tricyclo[3.3.1.1^{3,7}] decane, 1,3-bis(2-(meth)acryloyloxyethyloxycarbomethyl)tricyclo[3.3.1,1^{3,7}]dec ane, 1,4-bis(meth)acryloyloxymethylcyclohexane, 1,4-bis(meth)acryloyloxymethylperfluorocyclohexane, and the like.

Typical examples of the heterocyclic (meth)acrylate include tetrahydrofurfuryl (meth)acrylate, tris(2-hydroxyethyl)isocyanurate tri(meth)acrylate, and the like.

Typical examples of the aromatic (meth)acrylate include benzyl (meth)acrylate, phenoxyethyl (meth)acrylate, phenyl (meth)acrylate, 2-methylphenyl (meth)acrylate, 2-methylbenzyl (meth)acrylate, 3-methylphenyl (meth)acrylate, 3-methylbenzyl (meth)acrylate, 4-methylphenyl (meth)acrylate, 4-methylbenzyl (meth)acrylate, 2-ethylphenyl (meth)acrylate, 3-ethylphenyl (meth)acrylate, 2-phenylethyl (meth)acrylate, 2-phenyl-i-propyl (meth)acrylate, 3-phenyl-n-propyl (meth)acrylate, 4-phenyl-n-butyl (meth)acrylate, 2-biphenyl (meth)acrylate, 3-biphenyl (meth)acrylate, 4-biphenyl (meth)acrylate, 4-biphenylmethyl (meth)acrylate, 2-methylbiphenyl-3-methyl (meth)acrylate, 1-(4-biphenyl)ethyl (meth)acrylate, 9-fluorenyl (meth)acrylate, 9-fluorenylmethyl (meth)acrylate, 9,9-bis[4-(2-hydroxyethyl(meth)acryloylphenyl]fluorene, 9,9-bis[4-(2-hydroxypropyl(meth)acryloylphenyl]fluorene, 9,9-bis[4-(2-hydroxybutyl(meth)acryloylphenyl]fluorene, bisphenol A-EO (4 moles) adduct diacrylate, bisphenol A-EO (10 moles) adduct diacrylate, bisphenol A-PO adduct diacrylate, tribromophenyl (meth)acrylate, and the like.

The content of the component A is preferably 50 wt % or less, particularly preferably 5 to 40 wt %, with respect to the entire polymerizable composition.

The component B is not particularly limited, if it is an aliphatic (meth)acrylate.

Typical examples of the aliphatic (meth)acrylate include lauryl (meth)acrylate, butoxyethyl (meth)acrylate, methoxypolyethylene glycol (meth)acrylate, 2-ethylhexyl (meth)acrylate, 2-hydroxyethyl (meth)acrylate, 2-hydroxypropyl (meth)acrylate, 2 -(meth)acryloyloxyethyl acid phosphate, 2,2,2-trifluoroethyl (meth)acrylate, 2, 2, 3, 3-tetrafluoropropyl (meth)acrylate, 1H, 1H, 5H-octafluoropentyl (meth)acrylate, 1,6-hexanediol di(meth)acrylate, 1,9-nonanediol di(meth)acrylate, polyethylene glycol di(meth)acrylate (ethylene glycol in one molecule: 2 to 15 moles), neopentylglycol di(meth)acrylate, tripropylene glycol di(meth)acrylate, PO-modified neopentylglycol di(meth)acrylate, epoxy-modified hexanediol di(meth)acrylate, 1H, 1H, 6H, 6H-perfluoro-1,6-hexanediol di(meth)acrylate, 1H, 1H, 2H, 2H, 11H, 11H, 12H, 12H-perfluoro-1,12-dodecanediol di(meth)acrylate, bis(2-(meth)acryloylthioethyl)sulfide, pentaerythritol tri(meth)acrylate, trimethylolpropane tri(meth)acrylate, EO-modified trimethylolpropane tri(meth)acrylate, PO-modified trimethylolpropane tri(meth)acrylate, glycerol tri(meth)acrylate, pentaerythritol tetra(meth)acrylate, di (trimethylolpropane) tetra(meth)acrylate, and the like.

The content of the component B is preferably 90 wt % or less, particularly preferably 10 to 80 wt %, with respect to the entire polymerizable composition.

Among the examples of component B, the component B preferably contains at least one (meth)acrylate having a hydrophilic group. Use of such a component B leads to improvement in adhesiveness of the base lens material to the inorganic compound layer, and thus, it is possible to prevent cracking and wrinkling, in particular wrinkling, of the inorganic compound layer under high-temperature and high-humidity environment effectively. The content of the (meth)acrylate containing a hydrophilic group is preferably 1 wt % or more, particularly preferably 5 to 80 wt %, with respect to the entire polymerizable composition.

Typical examples of the hydrophilic groups include hydroxyl group (-OH), carboxyl group (-COOH), amino group (-NH₂), phosphate group (-PO₃H) and ethyleneoxide group (-CH₂CH₂O-), and the like.

It is possible to control the refractive index of the hardened product by adjusting the content of the monomer having fluorine atoms among the radical polymerizable monomers above. For example, increase in the content of the fluorine atom-containing monomer in the polymerizable monomer mixture generally results in decrease in refractive index.

Such (meth)acrylate monomers can be prepared in esterification reaction of a particular alcohol with a (meth)acrylic acid, and are also commercially available.

The cationic polymerizable monomer is not particularly limited, if it is a cationically polymerizable monomer, and examples thereof include epoxy compounds such as ethylene glycol diglycidylether, diethylene glycol diglycidyl ether, polyethylene glycol diglycidyl ether, bisphenol A diglycidyl ether, 3,4-epoxycyclohexenylmethyl 3',4'-epoxycyclohexenecarboxylate, bis(3,4-epoxycyclohexylmethyl)-4,5-epoxycyclohexane-1,2-dicarboxylate-modified ε-caprolactone, tetra(3,4-epoxycyclohexylmethyl)butane-tetra-carboxylate-modified ε-caprolactone; oxetane compounds such as 3-ethyl-3-hydroxymethyloxetane, 1,4-bis{[(3-ethyl-3-oxetanyl)methoxy]methyl}benzene, di[1-ethyl(3-oxetanyl)]methyl ether, and phenolic novolak oxetane; and the like.

The polymerizable composition according to the present invention normally contains a polymerization initiator. The polymerization initiator may be a radical photopolymerization initiator or a radical thermal polymerization initiator if it is a radical polymerizable monomer, and a cationic photopolymerization or cationic thermal polymerization initiator if it is a cationic polymerizable monomer.

The radical photopolymerization initiator is not particularly limited, if it generates radicals by photoirradiation, and examples thereof include carbonyl compound-based photopolymerization initiators such as acetophenones, benzophenones, diacetyls, benzyls, benzoins, benzoin ethers, benzyldimethylketals, benzoylbenzoates, hydroxyphenylketones, and aminophenylketones; organic sulfur compound-based photopolymerization initiators such as thiuram sulfides and thioxanthones; organic phosphorus compound-based photopolymerization initiators such as acylphosphine oxides and acylphosphinate esters; and the like. The radical photopolymerization initiators may be used alone or in combination of two or more.
The content of the radical photopolymerization initiator is not particularly limited, but is preferably 0.5 to 10 wt %, particularly preferably 1 to 7 wt %, with respect to the total amount of the polymerization composition.

Among thermal polymerization initiators that decompose thermally and generate radicals, the radical thermal polymerization initiator for use preferably has a thermal decomposition temperature of approximately 30°C or higher, more preferably approximately 60°C or higher. Among the compounds commonly used as a thermal polymerization initiator in radical polymerization reactions, the thermal polymerization initiator for use is particularly preferably an organic peroxide that does not generate a by-product such as gas or water. Such organic peroxides are grouped according to the chemical structure into alkyl or aryl hydroperoxides, dialkyl or diaryl peroxides, alkyl peroxy acids and the esters thereof, diacyl peroxides, ketone peroxides, and others. Any organic peroxide may be used in the present invention. The radical thermal polymerization initiators may be used alone or in combination of two or more.
The content of the radical thermal polymerization initiator is not particularly limited, but preferably 0.5 to 5 wt %, particularly preferably 1 to 3 wt %, with respect to the total amount of the polymerization composition.

The cationic photopolymerization initiator is not particularly limited, if it generates cations by photoirradiation, and examples thereof include ionic photochemical acid generators such as aryl diazonium salts, diaryl iodonium salts, triarylsulfonium salts, and triarylphosphonium salts; nonionic photochemical acid generators such as sulfonic acid-2-nitro benzyl ester, iminosulfonate, and o-nitrobenzyl carboxylate esters; and the like. The cationic photopolymerization initiators may be used alone or in combination of two or more.
The content of the cationic photopolymerization initiator is not particularly limited, but preferably 0.5 to 10 wt %, particularly preferably 1 to 7 wt %, with respect to the total amount of the polymerization composition.

Among thermal polymerization initiators that decompose thermally and generate cations, the cationic thermal polymerization initiator for use preferably has a thermal decomposition temperature of approximately 30°C or higher, more preferably, approximately 60°C or higher. The cationic thermal polymerization initiator is not particularly limited, it generates cations by photoirradiation, and examples thereof include sulfonium salts, onium salts, and the like. The cationic thermal polymerization initiators may be used alone or in combination of two or more.
The content of the cationic thermal polymerization initiator is not particularly limited, but preferably 0.5 to 10 wt %, particularly preferably 1 to 7 wt %, with respect to the total amount of the polymerization composition.

The microlens according to the present invention has an inorganic compound layer on the surface of the hardened product of the polymerizable composition.
The inorganic compound layer is not particularly limited, if it is a layer of an inorganic compound, and may be a layer having a function, such as so-called antireflective layer, reflective layer, wavelength filter, transparent conductive layer (ITO layer), moisture-proof layer, or stain-proof layer. In particular, the microlens preferably has an antireflective layer on the surface for prevention of light loss by reflection on surface.
Examples of materials for the antireflective layer include SiO₂, TiO₂, Ta₂O₅, ZrO₂, Al₂O₃, SiO, Si₂O₃, ZnO, CaF₂, MgF₂, AlF₃, ZnS, and the like.

In the present invention, the thickness of the inorganic compound layer is not particularly limited, and normally 10 to 2,000 nm. When the inorganic compound layer is a laminate layer having multiple layers, the total thickness is preferably in the range above.

Hereinafter, a method of producing a microlens will be described with reference to Figure 1, but the method according to the present invention is not limited thereto. Although a molding method is performed by using a stamper in the method shown in Figure 1, a plastic molding method by using a metal mold, a processing method by cutting or the like may be used instead, in particular in production of microlens arrays.

In production of microlenses, a polymerizable composition 1 according to the present invention is applied on a glass plate 2 by a known method, for example with a common dispennser, as shown in Figure 1(A), and the applied composition is pressed with a stamper 3 having a particular shape as shown in Figure 1(B). The glass plate 2 is preferably previously surface-treated with a coupling agent, for preservation of adhesion strength. The coupling agent for use is preferably the silane-coupling agent described above that is used as a surface-finishing agent for the metal oxide fine particles.

The polymerizable composition is then allowed to polymerize and harden. The polymerization method is determined according to the polymerization initiator contained in the polymerizable composition. For example, when a photopolymerization initiator is contained in the polymerizable composition, a molded hardened product 4 of the polymerizable composition is formed by photohardening while the composition is pressed, as shown in Figure 1 (C). Ultraviolet ray is normally irradiated during the photo-hardening. Examples of the light sources for ultraviolet ray include ultrahigh-pressure mercury lamp, high-pressure mercury lamp, low-pressure mercury lamp, metal halide lamp, carbon arc lamp, xenon lamp, and the like, but use of a high-pressure mercury or metal halide lamp is preferable. The UV irradiation quantity may vary according to the composition of the polymerizable composition according to the present invention, but is normally 600 to 8,000 mJ/cm².

When a thermal polymerization initiator is contained in the polymerizable composition, thermosetting is used instead of photohardening. When both a photopolymerization initiator and a thermal polymerization initiator are contained in the polymerizable composition, photohardening and thermosetting may be performed simultaneously.
During thermosetting, the polymerizable composition is normally hardened by heating to a temperature not lower than the thermal decomposition temperature of the thermal polymerization initiator contained in the polymerizable composition. The heating temperature may vary according to the kind of the thermal polymerization initiator contained, but the heating time is normally 10 to 60 minutes.

The stamper 3 is separated (Figure 1(D)) after hardening, and an inorganic compound layer 5 is formed on the surface, as shown in Figure 1(E). The inorganic compound layer is formed, for example, by vacuum deposition, sputtering, molecule beam epitaxy, ionic deposition, laser-ablation, CVD, sol-gel process, liquid phase precipitation, spraying, or the like.

### EXAMPLES

### (Preparation of microlens)

Polymerizable monomers and silica sol were mixed in the amounts (by weight) shown in each of Tables 1 to 4, and the solvent derived from silica sol was removed under reduced pressure, to give each polymerizable composition. When a silane-coupling agent (MPS or ESC) was added, the silica sol and the silane-coupling agent were mixed at the weight ratio of silica to the silane-coupling agent shown in each Table, and the mixture was stirred for 24 hours, before the polymerizable monomer and the silica sol were mixed. The weight rate of silica in each Table is a weight ratio of the silica sol solid matter.

Then, a base microlens material was molded by using each of the polymerizable compositions by a stamper method. Specifically, a polymerization initiator was added to the polymerizable composition to a predetermined amount, and the polymerizable composition was applied on a glass plate in an amount of several grams and pressed with a stamper. Each of the lens impressions formed on the stamper at a density of approximately 160 piece/cm² had a diameter of approximately 250 µm. The polymerizable composition was hardened by irradiation of ultraviolet ray onto the polymerizable composition from the glass-plate side by a high-pressure mercury lamp to a UV irradiation quantity of 7,500 mJ/cm² on the glass surface, while the composition is pressed. Then, the pressure was eliminated and the stamper was separated from the hardened product, to give a base microlens material. After separation, it was heated at 150°C for 1 hour for acceleration of polymerization.

An inorganic compound layer was then formed on the surface of the base microlens material. More particularly, SiO₂ and TiO₂ were deposited alternately by ion-assisted deposition, to form a multilayer (5-layered) layer. The inorganic compound layer had the following configuration: hardened product side: SiO₂ (250 nm in thickness) - TiO₂ (250 nm in thickness) - SiO₂ (250 nm in thickness) - TiO₂ (250 nm in thickness) - SiO₂ (250 nm in thickness): surface side.

### <Evaluation>

The microlenses obtained were evaluated in the following tests, and the results are summarized in Tables 1 to 4.

### (High-temperature high-humidity test)

The microlens having an inorganic compound layer was stored under a high-temperature and high-humidity environment (temperature: 85°C, relative humidity: 85%) for a specified period. Change in appearance of the inorganic compound layer on the microlens surface was observed visually and evaluated according to the following criteria.
○: No change in appearance of the inorganic compound layer;
×: Cracking or/and wrinkling of the inorganic compound layer.

### (Temperature cycling test)

The microlens having an inorganic compound layer was stored under a temperature cycle environment of heating (15 minutes), constant high temperature (85°C, 15 minutes), cooling (15 minutes), and constant low temperature (-40°C, 15 minutes) for specified cycles. The appearance of the base microlens material was observed visually and evaluated according to the following criteria.
○: No change in appearance of base lens material; and
×: Cracking of base lens material observed.

**[Table 1]**

| Component | | Comparative Example 1-1 | Example 1-1 | Example 1-2 | Example 1-3 | Example 1-4 | Example 1-5 |
|---|---|---|---|---|---|---|---|
| Polymerizable composition blending ratio | EGDA (linear·bifunctional·hydrophilic) | 50 | 49 | 47 | 45 | 35 | 25 |
| | PETA (linear·trifunctional·hydrophilic) | 50 | 49 | 47 | 45 | 35 | 25 |
| | Silica | 0 | 2 | 6 | 10 | 30 | 50 |
| Polymerization initiator A | | 1 | 1 | 1 | 1 | 1 | 1 |
| High-temperature high-humidity test 100h | | × | ○ | ○ | ○ | ○ | ○ |
| High-temperature high-humidity test 500h | | × | × | × | ○ | ○ | ○ |
| High-temperature high-humidity test 1000h | | × | × | × | × | ○ | ○ |
| High-temperature high-humidity test 2000h | | × | × | × | × | ○ | ○ |

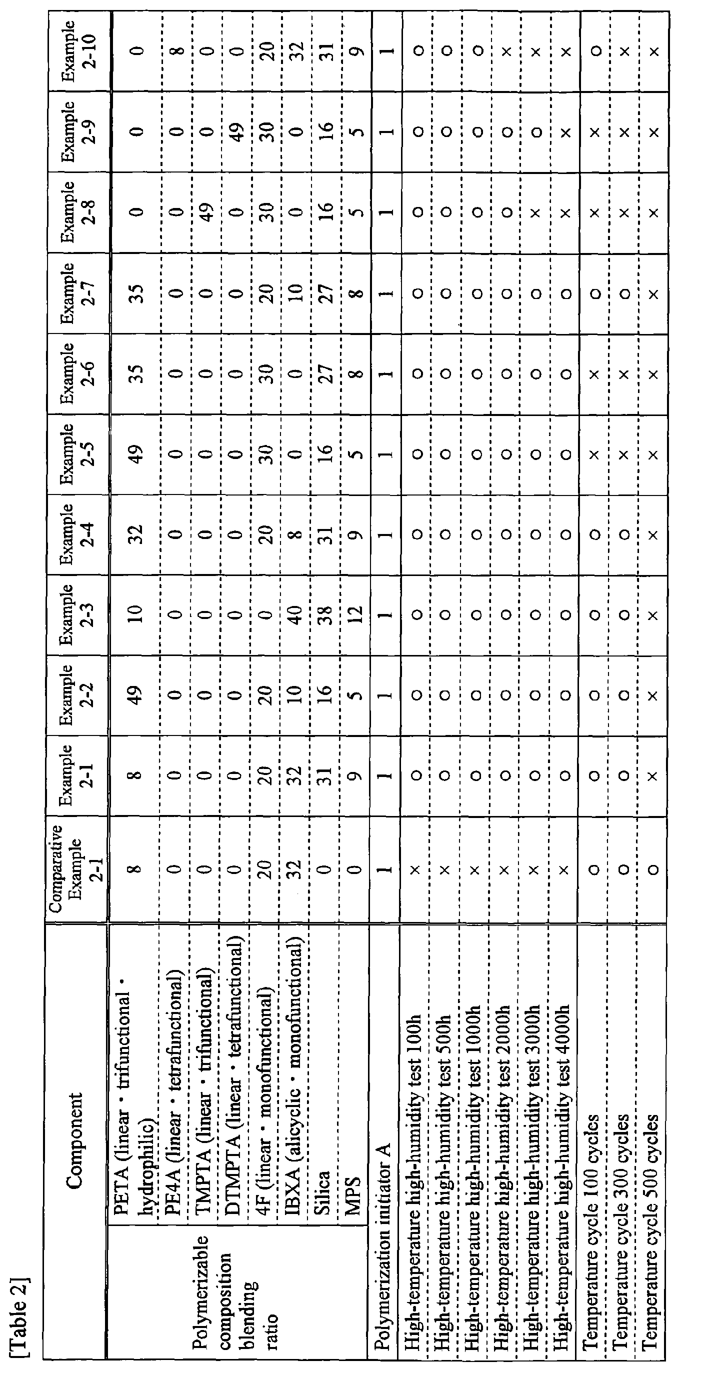

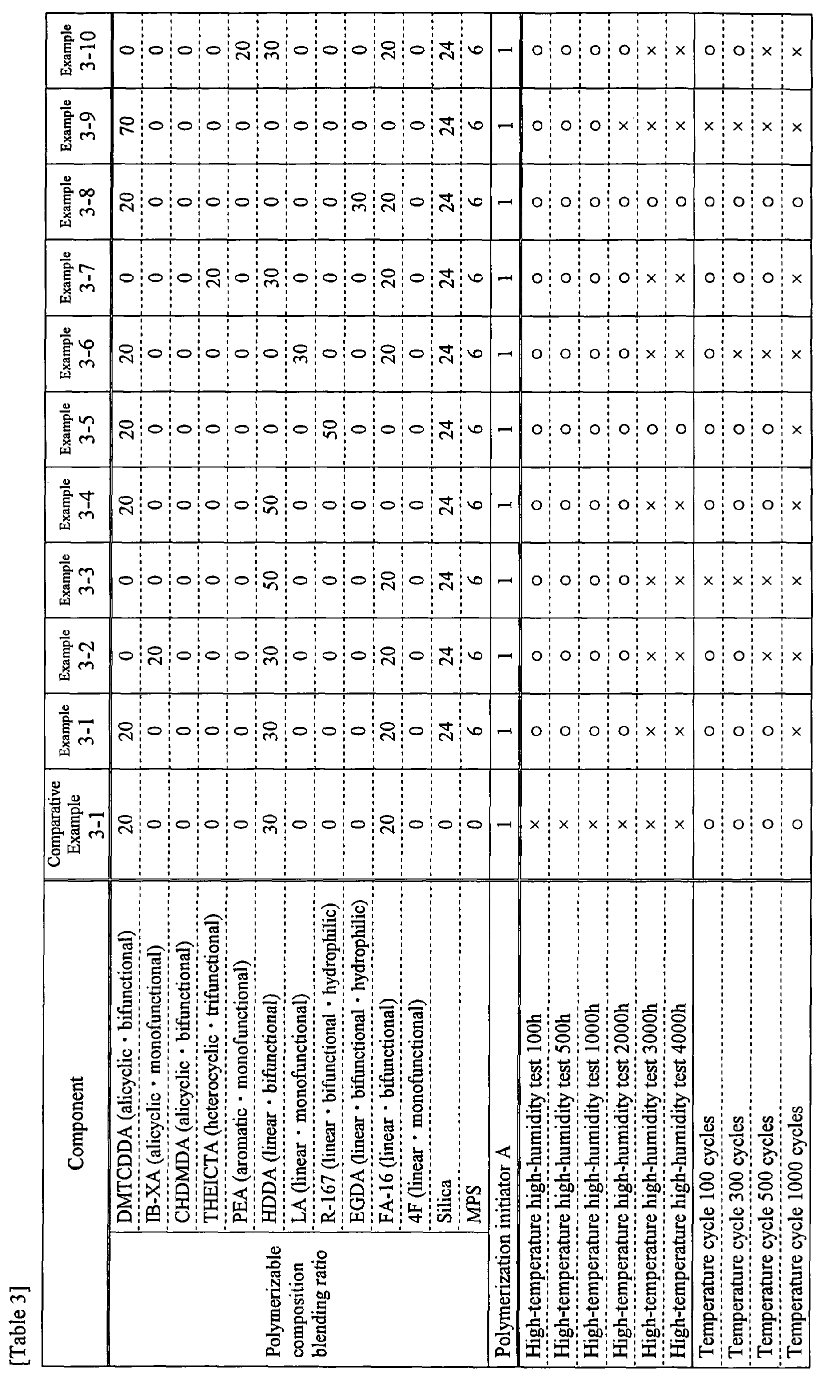

**[Table 4]**

| Component | | Comparative Example 4-1 | Example 4-1 |
|---|---|---|---|
| Polymerizable composition blending ratio | DCHDE (alicyclic · ifunctional) | 100 | 61 |
| | Silica | 0 | 30 |
| | ECS | 0 | 9 |
| Polymerization initiator B | | 4 | 4 |
| High-temperature high-humidity test 100h | | × | ○ |
| High-temperature high-humidity test 500h | | × | ○ |
| High-temperaturehigh-humidity test 1000h | | × | ○ |
| High-temperature high-humidity test 2000h | | × | ○ |

Product names of the components used in Examples are as follows:
EGDA: Polyethylene glycol #200 diacrylate, Light Acrylate 4EG-A, manufactured by Kyoeisha Chemical Co., Ltd.
PETA: Pentaerythritol triacrylate, Light Acrylate PE-3A, manufactured by Kyoeisha Chemical Co., Ltd.
PE4A: Pentaerythritol tetraacrylate, Light Acrylate PE-4A, manufactured by Kyoeisha Chemical Co., Ltd.
TMPTA: Trimethylolpropane triacrylate, Light Acrylate TMP-A, manufactured by Kyoeisha Chemical Co., Ltd
DTMPTA: Ditrimethyrollpropane tetraacrylate, Aronix M-408, manufactured by Toagosei Co., Ltd.
4F: Tetrafluoropropyl acrylate, Viscoat 4F, manufactured by Osaka Organic Chemical Industry Ltd.
IBXA: Isobornyl acrylate, Light Acrylate IB-XA, manufactured by Kyoeisha Chemical Co., Ltd.
DMTCDDA: Dimethylol tricyclo[5.2 .1.0^{2,6}]decane di(meth)acrylate, Light Acrylate DCP-A, manufactured by Kyoeisha Chemical Co., Ltd.
CHDMDA: 1,4-Cyclohexanedimethanol diacrylate, manufactured by Monomer-Polymer & Dajac Labs, Inc.
THEICTA: Tris(2-hydroxyethyl)isocyanurate triacrylate, FA-731A (manufactured by Hitachi Chemical Company Ltd.)
HDDA: Hexanediol diacrylate, Light Acrylate 1.6HX-A, manufactured by Kyoeisha Chemical Co., Ltd.
LA: lauryl acrylate, Light Acrylate L-A, manufactured by Kyoeisha Chemical Co., Ltd.
R-167: Epoxy-modified hexanediol diacrylate, R-167, manufactured by Nippon Kayaku Co., Ltd.
FA-16: 1H,1H,2H,2H,11H,11H,12H,12H-Perfluoro-1,12-dodecanediol diacrylate: Fluorite FA-16 manufactured by Kyoeisha Chemical Co., Ltd.
DCHDE: 3,4-Epoxycyclohexenylmethyl-3',4'-epoxycyclohexene carboxylate, Celoxide 2010, manufactured by Daicel Chemical Industries, Ltd.
Silica sol: Isopropanol silica sol IPA-ST, manufactured by Nissan Chemical Industries Ltd., average particle diameter: 20 nm, solid matter: 30 wt %
MPS: γ-methacryloxypropyltrimethoxysilane, KBM-503, manufactured by Shin-Etsu Chemical Co., Ltd.
ECS: β-(3,4-epoxycyclohexyl)ethyltrimethoxysilane, KBM-303, manufactured by Shin-Etsu Chemical Co., Ltd.
Polymerization initiator A: Lucirin TPO-L, manufactured by BASF Japan Ltd.
Polymerization initiator B: SP-150, manufactured by ADEKA Corporation.

### Industrial Applicability

The microlens according to the present invention is useful as a lens for use in optical devices such as optical connector, optical switch, optical multiplexer/demultiplexer, optical transceiver, and optical display device.

## Claims

1. A microlens, comprising a hardened product obtained by polymerization of a polymerizable composition containing a polymerizable monomer and metal oxide fine particles having an average diameter of 1 to 80 nm as essential components and an inorganic compound layer coated on the surface thereof.

2. The microlens according to Claim 1, wherein the content of the metal oxide fine particles is 1 to 60 wt % with respect to the entire polymerizable composition.

3. The microlens according to Claim 1 or 2, wherein the polymerizable monomer is at least one monomer selected from the group consisting of radical polymerizable monomers and cationic polymerizable monomers.

4. The microlens according to any one of Claims 1 to 3, wherein the polymerizable monomer is a radical polymerizable monomer containing a (meth)acrylate (A) having a cyclic structure and an aliphatic (meth)acrylate (B) as essential components.

5. The microlens according to Claim 4, wherein the aliphatic (meth)acrylate (B) has at least one hydrophilic group selected from the group consisting of hydroxyl (-OH), carboxyl (-COOH), amino (-NH₂), phosphate (-PO₃H) and ethyleneoxide (-CH₂CH₂O-) groups.

6. The microlens according to any one of Claims 1 to 5, wherein the polymerization is photopolymerization or thermal polymerization.

7. The microlens according to any one of Claims 1 to 6, wherein the microlens is prepared by a stamper method.

8. An optical device, comprising the microlens according to any one of Claims 1 to 7.
